# EUROPÄISCHE PATENTSCHRIFT

(11) **EP 2 701 019 B1**
(45) Veröffentlichungstag und Bekanntmachung des Hinweises auf die Patenterteilung: **29.07.2020**
(21) Anmeldenummer: 13003290.7
(22) Anmeldetag: 28.06.2013
(51) Int. Cl.: G05B 19/042, H02M 1/00, G06F 13/10

(54) **Verfahren zur Parametrierung eines Feldgerätes und entsprechendes System zur Parametrierung**
Method for adjusting the parameters of a field device and corresponding system and adjustment of parameters
Procédé de paramétrage d'un appareil de terrain, appareil de terrain correspondant et système de paramétrage

(30) Priorität: 21.08.2012 DE 102012016406
(43) Veröffentlichungstag der Anmeldung: 26.02.2014
(73) Patentinhaber: Krohne Messtechnik GmbH, 47058 Duisburg (DE)
(72) Erfinder: Stettin, Gerd, 75399 Unterreichenbach (DE); Gerding, Michael, 44805 Bochum (DE)
(74) Vertreter: Gesthuysen Patent- und Rechtsanwälte

(56) Entgegenhaltungen:
- EP-A1- 2 246 761
- WO-A1-2005/048103
- WO-A2-2006/053668
- DE-A1-102008 001 886

## Beschreibung

Die Erfindung betrifft ein Verfahren zur Parametrierung eines Feldgerätes. Ferner betrifft die Erfindung ein System zur Parametrierung eines Feldgerätes mit einer Parametriereinheit.

Im Bereich der modernen Prozessautomatisierung werden zumeist Feldgeräte zur Überwachung von Prozessgrößen und Aktoren für die Beeinflussung der Prozesse verwendet. Der Kommunikation zwischen den Feldgeräten und beispielsweise einer Leitwarte dienen Feldbusse, für die unterschiedliche Datenprotokolle für die Übertragung der Mess- bzw. Steuerdaten verwendet werden. Daneben ist es üblicherweise auch vorgesehen, dass die Feldgeräte selbst noch Anzeigeeinheiten, sogenannte Displays aufweisen, über die beispielsweise die Messdaten oder weitere Werte des Feldgerätes dargestellt werden können. Daher haben viele Feldgeräte zumindest zwei Ausgabemöglichkeiten: einmal eine Schnittstelle für den Anschluss des Feldgerätes an einen Feldbus zur Datenverbindung und einmal eine Anzeigeeinheit für die Vor-Ort-Darstellung. Gelegentlich ist auch eine Eingabeeinheit, z. B. in Form einiger Knöpfe, am Feldgerät vorhanden oder über eine Service-Schnittstelle lässt sich beispielsweise direkt eine Konfigurationseinheit in Form eines sogenannten Handgerätes (Handheld) oder eines tragbaren Computers in Form eines Laptops anschließen.

Problematisch ist es, wenn die Datenverbindung selbst nicht sicher ist und wenn gleichzeitig die Anwendung des Feldgerätes sicherheitskritisch ist. Wird vor allem das Feldgerät parametriert, wird also eingestellt, wie es funktionieren soll, so ist es überaus wichtig, dass die Parameterwerte sicher im Feldgerät gesetzt werden. Relevant sind bei den jeweiligen Sicherheitsanforderungen ggf. auch die Vorgaben, um dem insbesondere in der Prozessautomatisierung wichtigen SIL (Safety Integrity Level)-Standard zu genügen.

Der Problematik von unsicheren Datenverbindungen oder Datenspeichern insbesondere bei sicherheitskritischen Anwendungen hat sich bereits ein Teil des Standes der Technik gewidmet.

Die Patentschrift US 6,445,965 B1 offenbart eine Methode zur Überwachung von sicheren Zuständen von Geräten in einer Anlage. Den Geräten sind jeweils abhängig von der Art der Bedienung Parameter zugeordnete, die von Sensoren zu überwachen sind. Für eine leichte Austauschbarkeit von Komponenten sind die Parameterwerte in einem Datenspeicher hinterlegt. Damit die Parameterwerte nicht unzulässig geändert werden können, wird eine Checksumme erzeugt und mit den aktuellen Werten verglichen.

In der Offenlegungsschrift US 2007/0124115 A1 wird eine Automatisierungsanlage mit Feldgeräten an einem Feldbus beschrieben, in dem sicherheitsgerichtete Daten unter Verwendung unterschiedlicher Mechanismen, z. B. dem Anwendungen von Prüfsummen übermittelt werden.

Die Offenlegungsschrift EP 2 246 761 A1 beschreibt eine Methode zur Überwachung der Parametrierung einer Automatisierungskomponente, wobei Prüfwerte des Bediengerätes und der Komponente miteinander verglichen werden. Die Prüfsummen werden dabei nicht über die eingestellten Parameterwerte, sondern über die Differenz zwischen den neu eingestellten Parameterwerten und den vorherigen Parameterwerten gebildet.

Die Offenlegungsschrift WO 2006/053668 A2 beschreibt ein Verfahren zum Parametrieren eines Gerätes, wobei die Parameterwerte wenigstens einmal zur Kontrolle vom Gerät zur Parametriereinheit rückgelesen werden.

Die Offenlegungsschrift DE 10 2008 001 886 beschreibt ein Verfahren zum Austausch von Parametern zwischen einer Parametriereinheit und einem Feldgerät. In der Parametriereinheit und im Feldgerät wird jeweils aus den Parametern ein Prüfwert ermittelt. Die Übermittlung der Prüfwerte erfolgt über die gleiche Datenverbindung.

Aus dem Stand der Technik ist ein Verfahren bekannt, bei dem zwischen dem Feldgerät und einer Parametriereinheit mindestens eine Datenverbindung hergestellt wird. Dabei handelt es sich beispielsweise nur um eine temporär bestehende Verbindung oder ggf. auch über eine ständige Verbindung, wie sie beispielsweise durch einen Feldbus gegeben ist, an dem das Feldgerät und die Parametriereinheit permanent angeschlossen sind. Handelt es sich bei der Parametriereinheit um ein Handbediengerät (also einem sogenannten Handheld) oder um einen Service-Laptop, so wird die Datenverbindung bevorzugt nur für die Zeit der Parametrierung erzeugt. Die Parametriereinheit ist dabei in einer Ausgestaltung insbesondere eine vom Feldgerät unabhängige und eigenständige Einheit. Im nächsten Schritt wird von der Parametriereinheit zum Feldgerät mindestens ein Parametrierwert übertragen, also insbesondere über die erzeugte Datenverbindung übersendet. Dieser Parametrierwert ist zuvor beispielsweise von einer Bedienperson an der Parametriereinheit eingegeben oder aus einer Liste ausgewählt oder einem Datenspeicher entnommen oder von einem Steuerprogramm, z. B. als Teil des Ablaufs in einer Leitwarte für den Abgleich von unterschiedlichen Feldgeräten innerhalb einer Anlage passend generiert worden. Vom Feldgerät wird darauf mindestens ein Parametrierwert empfangen.

Da die Datenverbindung jedoch ggf. unsicher ist, muss überprüft werden, ob der ausgewählte und gesendete Parameterwert gleich dem empfangenen Parameterwert ist. Daher wird von der Parametriereinheit zumindest aus dem mindestens einen zu übertragenden Parametrierwert mindestens ein erster Prüfwert erzeugt. Bei dem Prüfwert handelt es sich beispielsweise um eine Prüfsumme oder einen sogenannten CRC (cyclic redundancy check). Der Prüfwert kann dabei nach der Übertragung, während der Übermittlung oder vorher generiert werden. Von dem Feldgerät wird zumindest aus dem mindestens einen empfangenen Parametrierwert mindestens ein zweiter Prüfwert erzeugt. Dabei werden in einer Ausgestaltung der erste und der zweite Prüfwert nach dem gleichen Schema und in einer alternativen Ausgestaltung über unterschiedliche Algorithmen erzeugt. Der erste und der zweite Prüfwert werden in einer Ausgestaltung für jeden Parameterwert einzelnen erzeugt, auch wenn mehrere Parameterwerte am Feldgerät einzustellen sind. In einer alternativen Variante werden die Prüfwerte über mehrere Parameterwerte generiert.

Sodann werden zumindest der erste Prüfwert und der zweite Prüfwert miteinander verglichen, woraus ein Vergleichsergebnis erzeugt wird. Im einfachsten Fall ist das Vergleichsergebnis entweder Übereinstimmung oder Abweichung. Im Fall der Übereinstimmung bedeutet dies, dass der Parameterwert oder die Parameterwerte richtig übertragen worden ist bzw. sind, und im Feldgerät können die Parameterwerte übernommen und benutzt werden. So kann beispielsweise dann am Feldgerät die Parametrierung quittiert werden. Im Fall der Abweichung wird ggf. die Parametrierung wiederholt oder es wird eine andere Datenverbindung erzeugt oder die Parametrierung wird abgebrochen und das Feldgerät geht in einen gesicherten (Default-)Zustand über.

Der Erfindung liegt daher die Aufgabe zugrunde, ein alternatives Verfahren zur Parametrierung eines Feldgerätes - und ein entsprechendes Parametriersystem - anzugeben, das die sichere Übergabe von Parameterwerten über eine möglicherweise unsichere Datenverbindung erlaubt.

Das erfindungsgemäße Verfahren, bei dem die zuvor hergeleitete und aufgezeigte Aufgabe gelöst ist, ist zunächst und im Wesentlichen dadurch gekennzeichnet, dass vom Feldgerät der zweite Prüfwert über eine zur Datenverbindung zwischen Feldgerät und Parametriereinheit unterschiedliche Ergänzungsdatenverbindung ausgegeben wird.

Da die Datenverbindung und die damit im Normalfall verbundene Art der Datenübertragung möglicherweise unsicher sind, wird erfindungsgemäß die Ausgabe des zweiten Prüfwerts über eine andere Verbindung vorgenommen. Damit wird verhindert, dass zumindest nicht über die gleiche Datenverbindung ein weiterer Fehler in die Datenübertrag hineinkommt.

In einer Ausgestaltung wird vom Feldgerät der zweite Prüfwert in optisch und/oder akustisch und/oder haptisch und/oder olfaktorisch registrierbarer Form ausgegeben. Das Feldgerät gibt in dieser Ausgestaltung den von ihm erzeugten zweiten Prüfwert derartig aus, dass er von einer vor Ort befindlichen Bedienperson registriert, d. h. aufgenommen werden kann. Damit geht einher, dass das Feldgerät derartig ausgestaltet ist, das es seinen zweiten Prüfwert über eine entsprechende Methode bzw. Schnittstelle im weiteren Sinne ausgeben kann. In einer Ausgestaltung erfolgt die Ausgabe des zweiten Prüfwerts über eine Anzeigeeinheit des Feldgerätes. Von der Bedienperson wird dieser zweite Prüfwert dann abgelesen und mit dem ersten Prüfwert der Parametereinheit verglichen.

Eine Ausgestaltung beinhaltet, dass vom Feldgerät über eine von der Art der Übertragung des Parameterwerts vom Feldgerät zur Parametriereinheit verschiedenen Art ausgegeben wird.

Eine andere Art wurde in der zuvor genannten Ausgestaltung durch die optische, akustische, haptische oder olfaktorische Ausgabe realisiert, insofern die Eingabe des mindestens einen Parameterwerts über einen anderen Weg, z. B. über eine Datenschnittstelle erfolgte. Da die Datenverbindung und die damit im Normalfall verbundene Art der Datenübertragung möglicherweise unsicher sind, wird in dieser Ausgestaltung die Ausgabe des zweiten Prüfwerts über eine andere Art der Datenübertragung vorgenommen. Damit wird verhindert, dass zumindest nicht über die gleiche Datenverbindung und die gleiche Kommunikationsart ein weiterer Fehler in die Datenübertrag hineinkommt.

In einer Ausgestaltung ist vorgesehen, dass der zweite Prüfwert der Parametriereinheit zugeführt wird und dass von der Parametriereinheit der erste Prüfwert mit dem zweiten Prüfwert verglichen und daraus ein Vergleichsergebnis erzeugt wird. In dieser Ausgestaltung überwacht die Parametriereinheit selbst, ob der Parameterwert richtig beim Feldgerät angekommen ist. Alternativ erfolgt der Vergleich über eine vom Feldgerät und der Parametriereinheit unabhängige dritten Einheit, die beispielweise aus einer Bedienperson oder aus einer separaten Vergleichseinheit besteht. Dabei müssen je nach Art des Vergleichs bzw. Instanz zur Durchführung des Vergleichs die Prüfwerte passend und insbesondere registrierbar bzw. verwertbar ausgegeben werden.

In einer Ausgestaltung wird von der Parametriereinheit der erste Prüfwert in optisch und/oder akustisch und/oder haptisch und/oder olfaktorisch registrierbarer Form ausgegeben. Auch bei der Parametriereinheit wird in dieser Ausgestaltung eine Ausgabe des - hier ersten - Prüfwerts vorgesehen, die es insbesondere einer Bedienperson erlaubt, den ersten Prüfwert aufzunehmen, d. h. insbesondere zu sehen oder zu hören.

Eine weitere Ausgestaltung sieht vor, dass der erste Prüfwert dem Feldgerät zugeführt wird und dass von dem Feldgerät der erste Prüfwert mit dem zweiten Prüfwert verglichen und daraus ein Vergleichsergebnis erzeugt wird. In dieser Ausgestaltung überprüft das Feldgerät selbst, ob es den mindestens einen Parameterwert richtig empfangen hat. Dabei gibt die Parametereinheit in einer Ausgestaltung den ersten Prüfwert derartig aus, dass der Prüfwert dem Feldgerät zuführbar ist. Alternativ wird eine Übertragungseinheit dazwischen angeordnet oder wird passend aktiv. Die Aufnahme des ersten Prüfwerts durch das Feldgerät erfolgt dabei über die Datenverbindung zwischen Parametriereinheit und Feldgerät zur Übertragung des mindestens einen Parameterwerts oder über einen separaten Eingang.

In einer Ausgestaltung ist vorgesehen, dass in Abhängigkeit vom Prüfungsergebnis der vom Feldgerät empfangene Parameterwert im Feldgerät als Parameterwert gesetzt wird. In dieser Ausgestaltung wird abhängig vom Vergleich, also in Abhängigkeit davon, ob die zwei Prüfwerte gleich sind oder die gleiche Information tragen, der übertragene und vom Feldgerät empfangene Parameterwert für den weiteren Betrieb des Feldgerätes als verwendbar gesetzt oder beispielsweise verworfen.

In einer weiteren Ausgestaltung werden der erste Prüfwert und der zweite Prüfwert oder wird nur der erste bzw. der zweite Prüfwert als Stromsignal ausgegeben. Dies als Alternative oder Ergänzung zur Ausgabe wenigstens eines Prüfwerts über beispielsweise eine Anzeigeeinheit oder eine von der Datenverbindung separate Schnittstelle. Die Ausgabe als Stromsignal oder das Einstellen eines Stromwertes erfolgt dabei beispielsweise in Anlehnung an die Übertragung von Messwerten als 4...20 mA-Signal. Alternativ lässt sich diese Signalisierung daher auch über die Stromversorgung des Feldgerätes bzw. der Parametriereinheit bewerkstelligen. Mögliche Signalausgänge sind dabei ein analoger Stromausgang, ein Frequenz- oder ein Pulsausgang. Eine Alternative besteht darin, eine beliebige Schnittstelle des Feldgerätes unterschiedlich zur normalerweise zugeordneten Art und Weise umzufunktionieren, um damit speziell für die Parametrierung den zweiten Prüfwert ausgeben zu können.

Zwei beispielhafte Varianten des Parametrierverfahrens bestehen insgesamt darin: in einer ersten Variante werden die Prüfwerte so ausgegeben, dass eine Bedienperson sie vor Ort registrieren kann, z. B. über eine Anzeigeeinheit oder über eine akustische Ausgabe der Prüfwerte. In einer zweiten Variante wird wenigstens ein Prüfwert als Stromsignal oder als Stromwert ausgegeben.

Die Abnahme dieses Prüfwerts kann dabei vor Ort beispielweise über ein Strommessgerät erfolgen.

Die zuvor hergeleitete und aufgezeigte Aufgabe ist nach einer weiteren Lehre der Erfindung bei dem eingangs genannten System mit einem Feldgerät und einer Parametriereinheit dadurch gelöst, dass die Parametrierung nach mindestens einer der zuvor genannten Ausgestaltungen des Parametrierverfahrens erfolgt. Das Parametriersystem wird dabei ggf. nur temporär erzeugt, indem eine Parametriereinheit mit dem Feldgerät für die Zeit der Parametrierung verbunden wird.

Bei dem Feldgerät handelt es sich insbesondere um einen Aktor oder ein Messgerät. Die Parametriereinheit ist beispielsweise eine Leitwarte, ein (vorzugsweise tragbarer) Computer oder ein Handheld als mobiles Bediengerät für Feldgeräte.

Der Vorgang der Erzeugung von Prüfwerten bzw. deren Ausgabe ist in einer Variante insbesondere ein- bzw. ausschaltbar und ggf. nur für besondere Anwendungen, z. B. sicherheitskritischer Art vorbehalten.

Im Einzelnen gibt es nun eine Vielzahl von Möglichkeiten, das erfindungsgemäße Verfahren und das erfindungsgemäße System auszugestalten und weiterzubilden. Dazu wird verwiesen einerseits auf die dem Patentanspruch 1 und dem Patentanspruch 9 nachgeordneten Patentansprüche, andererseits auf die folgende Beschreibung von Ausführungsbeispielen in Verbindung mit der Zeichnung. In der Zeichnung zeigen
- Fig. 1: eine schematische, im Wesentlichen die funktionalen Wirkzusammenhänge anhand eines Blockschaltbilds verdeutlichende Darstellung eines Systems zur Parametrierung eines Feldgerätes gemäß einer ersten Variante,
- Fig. 2: eine schematische, im Wesentlichen die funktionalen Wirkzusammenhänge anhand eines Blockschaltbilds verdeutlichende Darstellung eines Systems zur Parametrierung eines Feldgerätes gemäß einer zweiten Variante,
- Fig. 3: eine schematische, im Wesentlichen die funktionalen Wirkzusammenhänge anhand eines Blockschaltbilds verdeutlichende Darstellung eines Systems zur Parametrierung eines Feldgerätes gemäß einer dritten Variante und
- Fig. 4: ein Flussdiagramm einer Umsetzung des Parametrierverfahrens.

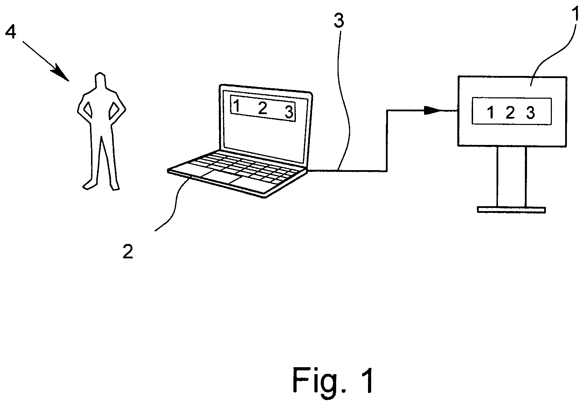

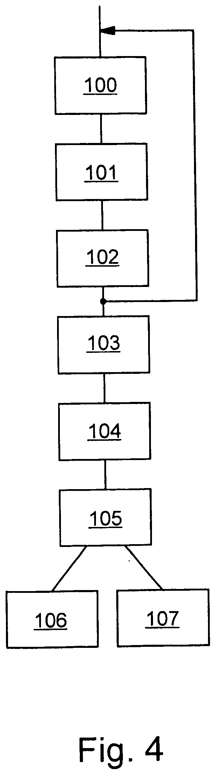

In den Fig. 1 bis 3 sind jeweils verschiedene Ausführungsbeispiele eines Parametriersystems dargestellt, wobei die Wirkzusammenhänge zwischen den verschiedenen Elementen verdeutlicht werden sollen. Der in der Fig. 4 dargestellte Ablauf ist ein Beispiel für die Verbindung und Anordnung der Schritte des Parametrierverfahrens. Dabei sind andere Ausgestaltungen des Systems und andere Abläufe der Schritte ebenfalls möglich und liegen im Rahmen der Erfindung.

Die Fig. 1 zeigt ein - insbesondere temporär bestehendes - System zur Parametrierung eines Feldgerätes 1, bei welchem es sich um ein Füllstandsmessgerät über Mikrowellen handelt. Insbesondere bei sicherheitsgerichteten Feldgeräten 1 ist es wichtig, dass die Feldgeräte 1 sicher funktionieren, wozu auch eine sichere Parametrierung gehört.

Für die Eingabe der Parameterwerte wird in der Anordnung der Fig. 1 ein tragbarer Computer in Form eines Laptops verwendet, der hier über eine Datenverbindung 3 in Form eines Kabels (alternativ wäre auch eine Funkverbindung möglich) mit dem Feldgerät 1 verbunden ist. Hierzu dient beim Feldgerät 1 ein HART-Eingang, also über eine Schnittstelle, die eine Datenkommunikation vermittels des in der Prozessautomatisierung häufig verwendeten HART-Protokolls erlaubt.

Problematisch an Datenverbindungen ist generell die Unsicherheit, ob der gesendete Wert identisch dem empfangenen ist. Weiterhin kann es insbesondere bei einer Vielzahl von Parameterwerten aufwändig und umständlich sein, wenn diese einzeln kontrolliert werden sollen.

Aufgrund dieser Probleme und insbesondere für sicherheitskritische Anwendungen wird von der Parametriereinheit 2 im Rahmen des in der Fig. 1 gezeigten Parametriersystems ein erster Prüfwert erzeugt, der zumindest den mindestens einen übermittelten Parametrierwert reflektiert. Vom Feldgerät 1 wird zumindest aus dem empfangenen Parametrierwert ein zweiter Prüfwert erzeugt. In der in der Fig. 1 dargestellten Anordnung gibt die Parametriereinheit 2 ihren ersten Prüfwert und das Feldgerät 1 seinen zweiten Prüfwert jeweils über eine eigene Anzeigeeinheit aus. Die Prüfwerte werden von einer Bedienperson 4 abgelesen und miteinander verglichen. Stimmen beide Prüfwerte miteinander überein, so weiß die Bedienperson 4, dass der gesendete Parameterwert mit dem empfangenen Parameterwert übereinstimmt. Davon ausgehend quittiert die Bedienperson 4 beim Feldgerät 1 den Parameterwert, so dass dieser vom Feldgerät 1 als Parameterwert hinterlegt und für die folgenden Messungen verwendet werden kann.

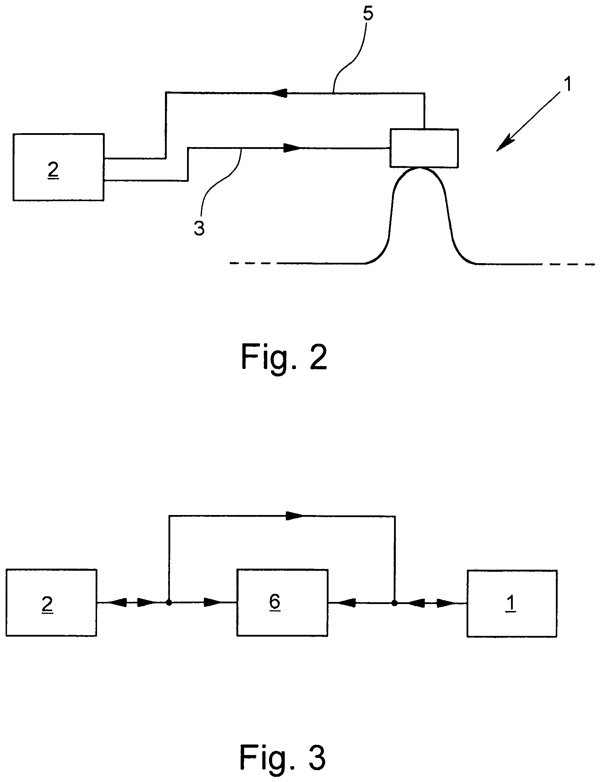

Solche optischen Anzeigen des Feldgerätes 1 setzen es voraus, dass das Feldgerät 1 für eine Bedienperson 4 zugänglich ist. Eine akustische Ausgabe des zweiten Prüfwerts durch das Feldgerät 1 kann die tolerierbare Distanz zwischen Bedienperson 4 und Feldgerät 1 erhöhen, ist jedoch immer noch an entsprechend gute Umgebungsbedingungen geknüpft. Für den Fall, dass der Zugriff auf den zweiten Prüfwert des Feldgeräts 1 nicht direkt gegeben ist bzw. dass das Feldgerät 1 nicht über eine solche Ausgabemöglichkeit verfügt, bieten die Ausgestaltungen des Parametriersystems der Fig. 2 und Fig. 3 Alternativen an.

Im System der Fig. 2 handelt es sich bei der Parametriereinheit 2 um eine Leitwarte, die über eine Datenverbindung 3 zum Senden des mindestens einen Parametrierwerts mit dem Feldgerät 1 verbunden ist. Bei dem Feldgerät 1 handelt es sich um ein Massendurchflussmessgerät nach dem Coriolis-Prinzip. Die Ausgabe des zweiten Prüfwerts vom Feldgerät 1 erfolgt hierbei über einen zur Schnittstelle für die Datenverbindung 3 unterschiedlichen Ausgang des Feldgeräts 1. Dafür wird beispielweise der zweite Prüfwert in ein Stromsignal umgewandelt und über die Ergänzungsdatenverbindung 5 an die Parametriereinheit 2, also an die Leitwarte übermittelt. Da die Kommunikation jeweils nur in einer Richtung - der Parameterwert wird von der Parametriereinheit 2 an das Feldgerät 1 und der zweite Prüfwert wird vom Feldgerät 1 zur Parametriereinheit 2 übertragen - erfolgt, sind hier Pfeile auf den entsprechenden Verbindungswegen 3, 5 eingetragen.

In diesem System der Fig. 2 gleicht somit die Parametriereinheit 2 die beiden Prüfwerte selbst miteinander ab. Alternativ werden durch die Parametriereinheit 2 beide Prüfwerte wiederum optisch, akustisch, haptisch oder olfaktorisch wahrnehmbar an eine Bedienperson 4 übergeben, so dass die Parametriereinheit 2 nur dem Empfang des zweiten Prüfwerts und dessen Umwandlung in eine von der Bedienperson leichter verarbeitbaren Form dient.

In der Variante der Fig. 3 verfügt das Feldgerät 1 nur über einen Signalein- und -ausgang für eine Datenverbindung 3. In dieser Variante wird beispielsweise der Parametrierwert über das HART-Protokoll empfangen und der zweite Prüfwert wird als Stromwert kodiert und an der gleichen Schnittstelle wie für das HART-Protokoll ausgegeben. Der Vergleich der Prüfwerte des Feldgeräts 1 und der Parametriereinheit 2 wird in dieser Ausgestaltung von einer von beiden Einheiten 1, 2 unabhängigen Vergleichseinheit 6 vorgenommen, die zwischen dem Feldgerät 1 und der Parametriereinheit 2 geschaltet ist und von beiden die Prüfwerte erhält (angedeutet durch die Pfeile, die jeweils zur Vergleichseinheit 6 zeigen). Die Übertragung des Parametrierwerts geht dabei an der Vergleichseinheit 6 vorbei (hier durch die Umleitung angedeutet) oder wird von ihr nicht registriert. Damit kann eine völlige Unabhängigkeit der Vergleichseinheit 6 realisiert werden.

Die Fig. 4 zeigt einen Ablauf der Schritte des Parametrierverfahrens, wie es in einem der zuvor beschriebenen Systeme oder auch in ähnlich ausgestalteten Parametriersystemen realisiert wird. Dabei sind jedoch auch andere Schrittabfolgen oder weitere Schritte innerhalb des Rahmens der Erfindung möglich.

Im Schritt 100 wird in einer Parametriereinheit ein zu setzender Parametrierwert ausgewählt oder durch die Bedienperson eingegeben. Im Schritt 101 übergibt die Parametriereinheit diesen Parametrierwert über die möglicherweise unsichere Datenverbindung an das Feldgerät und wird dort im Schritt 102 als Parametrierwert empfangen. Danach werden im hier gezeigten Verlauf noch weitere Parameterwerte vorgegeben (Schritt 100), an das Feldgerät übertragen (Schritt 101) und dort empfangen (Schritt 102). Alternativ lassen sich auch mehrere Parameterwerte auf einmal übertragen bzw. empfangen.

Ausgehend von dem zu sendenden Parameterwert oder den zu sendenden bzw. gesendeten Parameterwerten erzeugt die Parametriereinheit im Schritt 103 einen ersten Prüfwert und stellt ihn auf einer Anzeigeeinheit dar. Im Schritt 104 generiert auf der anderen Seite das Feldgerät einen zweiten Prüfwert aufgrund des empfangenen Parameterwerts bzw. der empfangenen Parameterwerte. Dabei verwenden sowohl Feldgerät als auch Parametriereinheit für einen möglichst einfachen Vergleich bei der Erzeugung der Prüfwerte den gleichen Algorithmus oder die Methoden der Generierung einer solchen Prüfsumme ist der Bedienperson bekannt und erlaubt eine entsprechende Umrechnung. Auch das Feldgerät stellt in der dargestellten Variante ihren, d.h. zweiten, Prüfwert auf einer Anzeigeeinheit dar.

Im Schritt 105 vergleicht eine Bedienperson den ersten mit dem zweiten Prüfwert und kommt zu einem entsprechenden Prüfergebnis. Im einfachsten Fall ist dies entweder "Übereinstimmung" oder "Unterschiedlichkeit". Im ersten und damit positiven Fall quittiert die Bedienperson im Schritt 106 die Parameterwerte am Feldgerät, so dass diese verwendet werden können. Im alternativen Fall der Unterschiedlichkeit wird im Schritt 107 die Parametrierung unterbrochen und die Bedienperson beginnt eine Fehlersuche bzw. die Realisierung einer anderen Datenübertragung.

## Patentansprüche

1. Verfahren zur Parametrierung eines Feldgerätes (1),
wobei zwischen dem Feldgerät (1) und einer Parametriereinheit (2) mindestens eine Datenverbindung (3) hergestellt wird, wobei von der Parametriereinheit (2) zum Feldgerät (1) mindestens ein Parametrierwert übertragen wird, wobei von dem Feldgerät (1) mindestens ein Parametrierwert empfangen wird, wobei von der Parametriereinheit (2) zumindest aus dem mindestens einen zu übertragenden Parametrierwert mindestens ein erster Prüfwert erzeugt wird, wobei von dem Feldgerät (1) zumindest aus dem mindestens einen empfangenen Parametrierwert mindestens ein zweiter Prüfwert erzeugt wird und wobei zumindest der erste Prüfwert mit dem zweiten Prüfwert verglichen und daraus ein Vergleichsergebnis erzeugt wird,
**dadurch gekennzeichnet,**
**dass** vom Feldgerät (1) der zweite Prüfwert über eine zur Datenverbindung (3) zwischen Feldgerät (1) und Parametriereinheit (2) unterschiedliche Ergänzungsdatenverbindung (5) ausgegeben wird.

2. Verfahren nach Anspruch 1, **dadurch gekennzeichnet, dass** vom Feldgerät (1) der zweite Prüfwert in optisch und/oder akustisch und/oder haptisch und/oder olfaktorisch registrierbarer Form ausgegeben wird.

3. Verfahren nach Anspruch 1 oder 2, **dadurch gekennzeichnet, dass** vom Feldgerät (1) der zweite Prüfwert über eine von der Art der Übertragung des Parameterwerts vom Feldgerät (1) zur Parametriereinheit (2) verschiedenen Art ausgegeben wird.

4. Verfahren nach einem der Ansprüche 1 bis 3, **dadurch gekennzeichnet, dass** der zweite Prüfwert der Parametriereinheit (2) zugeführt wird und dass von der Parametriereinheit (2) der erste Prüfwert mit dem zweiten Prüfwert verglichen und daraus ein Vergleichsergebnis erzeugt wird.

5. Verfahren nach einem der Ansprüche 1 bis 4, **dadurch gekennzeichnet, dass** von der Parametriereinheit (2) der erste Prüfwert in optisch und/oder akustisch und/oder haptisch und/oder olfaktorisch registrierbarer Form ausgegeben wird.

6. Verfahren nach einem der Ansprüche 1 bis 5, **dadurch gekennzeichnet, dass** der erste Prüfwert dem Feldgerät (1) zugeführt wird und dass von dem Feldgerät (1) der erste Prüfwert mit dem zweiten Prüfwert verglichen und daraus ein Vergleichsergebnis erzeugt wird.

7. Verfahren nach einem der Ansprüche 1 bis 6, **dadurch gekennzeichnet, dass** in Abhängigkeit vom Prüfungsergebnis der vom Feldgerät (1) empfangene Parameterwert im Feldgerät (1) als Parameterwert gesetzt wird.

8. Verfahren nach einem der Ansprüche 1 bis 7, **dadurch gekennzeichnet, dass** der erste Prüfwert und/oder der zweite Prüfwert als Stromsignal ausgegeben werden/wird.

9. System zur Parametrierung eines Feldgerätes (1) mit einer Parametriereinheit (2), wobei bei der Parametrierung des Feldgerätes (1) das Verfahren nach einem der Ansprüche 1 bis 8 angewendet wird.

10. System nach Anspruch 9, **dadurch gekennzeichnet, dass** es sich bei dem Feldgerät (1) um einen Aktor oder ein Messgerät handelt und dass die Parametriereinheit (2) eine Leitwarte, ein Computer oder ein Handgerät ist.

## Claims

1. Method for parameterization of a field device (1),
wherein at least one data connection (3) is established between the field device (1) and a parameterization unit (2), wherein at least one parameterization value is transmitted by the parameterization unit (2) to the field device (1), wherein at least one parameterization value is received by the field device (1), wherein at least one first test value is generated by the parameterization unit (2) at least from the at least one parameterization value to be transmitted, wherein at least a second test value is generated by the field device (1) at least from the at least one received parameterization value, and wherein at least the first test value is compared to the second test value and a comparison result is thus generated
**characterized in**
**that** the second test value is output by the field device (1) via a supplementary data link (5) differing from the data connection (3) between the field device (1) and parameterization unit (2).

2. Method according to claim 1, **characterized in that** the second test value is output by the field device (1) in visually and/or acoustically and/or haptically and/or olfactorily registrable form.

3. Method according to claim 1 or 2, **characterized in that** the second test value is output by the field device (1) via a type of transmission differing from the type of transmission of the parameter value from the field device (1) to the parameterization unit (2).

4. Method according to any one of claims 1 to 3, **characterized in that** the second test value is supplied to the parameterization unit (2) and that the first test value is compared to the second test value by the parameterization unit (2), and a comparison result is thus generated.

5. Method according to any one of claims 1 to 4, **characterized in that** the first test value is output by the parameterization unit (2) in visually and/or acoustically and/or haptically and/or olfactorily registrable form.

6. Method according to any one of claims 1 to 5, **characterized in that** the first test value is supplied to the field device (1) and the first test value is compared to the second test value by the field device (1), and a comparison result is thus generated.

7. Method according to any one of claims 1 to 6, **characterized in that**, depending on the test result, the parameter value received by the field device (1) is set as a parameter value in the field device (1).

8. Method according to any one of claims 1 to 7, **characterized in that** the first test value and/or the second test value is/are output as a current signal.

9. System for parameterization of a field device (1) with a parameterization unit (2), wherein the method of any one of claims 1 to 8 is applied in the parameterization of the field device (1).

10. System according to claim 9, **characterized in** the field device (1) is an actuator or a measuring device and that the parameterization unit (2) is a control station, a computer or a handheld device.

## Revendications

1. Procédé de paramétrage d'un appareil de terrain (1), au moins une liaison de données (3) étant établie entre l'appareil de terrain (1) et une unité de paramétrage (2), au moins une valeur de paramètre étant transmise de l'unité de paramétrage (2) à l'appareil de terrain (1), au moins une valeur de paramètre étant reçue par l'appareil de terrain (1), au moins une première valeur de contrôle étant générée par l'unité de paramétrage (2) à partir de l'au moins une valeur de paramètre à transmettre, au moins une deuxième valeur de contrôle étant générée par l'appareil de terrain (1) à partir de l'au moins une valeur de paramètre reçue et au moins la première valeur de contrôle étant comparée à la deuxième valeur de contrôle et un résultat de comparaison étant généré à partir de cela,
**caractérisé en ce**
**que** la deuxième valeur de contrôle est délivrée par l'appareil de terrain (1) sur une liaison de données complémentaire (5) différente de la liaison de données (3) entre l'appareil de terrain (1) et l'unité de paramétrage (2).

2. Procédé selon la revendication 1, **caractérisé en ce que** la deuxième valeur de contrôle est délivrée par l'appareil de terrain (1) sous une forme perceptiblement visuellement et/ou acoustiquement et/ou haptiquement et/ou olfactivement.

3. Procédé selon la revendication 1 ou 2, **caractérisé en ce que** la deuxième valeur de contrôle est délivrée par l'appareil de terrain (1) par le biais d'un mode qui est différent du mode de transmission de la valeur de paramètre de l'appareil de terrain (1) à l'unité de paramétrage (2).

4. Procédé selon l'une des revendications 1 à 3, **caractérisé en ce que** la deuxième valeur de contrôle est acheminée à l'unité de paramétrage (2) et **en ce que** la première valeur de contrôle est comparée à la deuxième valeur de contrôle par l'unité de paramétrage (2) et un résultat de comparaison est généré à partir de cela.

5. Procédé selon l'une des revendications 1 à 4, **caractérisé en ce que** la première valeur de contrôle est délivrée par l'unité de paramétrage (2) sous une forme perceptible visuellement et/ou acoustiquement et/ou haptiquement et/ou olfactivement.

6. Procédé selon l'une des revendications 1 à 5, **caractérisé en ce que** la première valeur de contrôle est acheminée à l'appareil de terrain (1) et **en ce que** la première valeur de contrôle est comparée à la deuxième valeur de contrôle par l'appareil de terrain (1) et un résultat de comparaison est généré à partir de cela.

7. Procédé selon l'une des revendications 1 à 6, **caractérisé en ce que** la valeur de paramètre reçue par l'appareil de terrain (1) est fixée en tant que valeur de paramètre dans l'appareil de terrain (1) en fonction du résultat de contrôle.

8. Procédé selon l'une des revendications 1 à 7, **caractérisé en ce que** la première valeur de contrôle et/ou la deuxième valeur de contrôle est/sont délivrée(s) sous la forme d'un signal de courant.

9. Système de paramétrage d'un appareil de terrain (1) avec une unité de paramétrage (2), le procédé selon l'une des revendications 1 à 8 étant utilisé lors du paramétrage de l'appareil de terrain (1).

10. Système selon la revendication 9, **caractérisé en ce que** l'appareil de terrain (1) est un actionneur ou un appareil de mesure et **en ce que** l'unité de paramétrage (2) est un poste de supervision, un ordinateur ou un terminal portable.
